**Europäisches Patentamt**

**European Patent Office**

**Office européen des brevets**

(19)

(11) Veröffentlichungsnummer: **0 186 229**

**A1**

## (12) EUROPÄISCHE PATENTANMELDUNG

(21) Anmeldenummer: **85201950.4**

(22) Anmeldetag: **26.11.85**

(51) Int. Cl.⁴: **H 04 Q 7/04**
**H 04 B 7/26**

(30) Priorität: **15.12.84 DE 3445789**

(43) Veröffentlichungstag der Anmeldung:
**02.07.86 Patentblatt 86/27**

(84) Benannte Vertragsstaaten:
**CH DE FR GB IT LI SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**CH FR GB IT LI SE**

(72) Erfinder: **Scheinert, Stefan, Dipl.-Ing.**
**Blütenstrasse 37**
**D-8501 Eckental(DE)**

(74) Vertreter: **Dreykorn-Lindner, Werner et al,**
**Philips Patentverwaltung GmbH Postfach 10 51 49**
**Billstrasse 80**
**D-2000 Hamburg 28(DE)**

(54) **Verfahren und Schaltungsanordnung zur Verkleinerung der Schutzzeiten zwischen Zeitkanälen eines digitalen Funkübertragungssystems.**

(57) In Zeitmultiplex-Datenübertragungsanlagen, insbesondere in einem digitalen Funkübertragungssystem, ist bei der blockweisen Datenübertragung dem eigentlichen Datenblock (Nachricht) eine aus zwei Teilen bestehende Impulsgruppe vorangestellt, wobei der erste Teil zur Ermittlung des Bit-Takts und der zweite Teil zur Erkennung des Rahmen-Synchronisationswortes des Zeitmultiplexrahmens verwendet wird. Bei einem Funkbertragungssystem sind zur Verhinderung der infolge der Funklaufzeit auftretenden Überlappungen der jeweiligen Zeitschlitze zwischen diesen eine sogenannte Schutzzeit vorgesehen. Diese Schutzzeiten grenzen nicht nur die jeweilige Funkzellengröße, sondern vermindern auch die Übertragungskapazität des Zeitmultiplexrahmens.

Um die Schutzzeit zwischen zwei Zeitkanälen des Zeitmultiplexrahmens zu verändern wird in der beweglichen Funkstation (MS) ein von der Entfernung zwischen dieser und der ortsfesten Funkstation (BS) abhängiger Vorhalt (V5) eingestellt. Hierzu kann die Entfernung anhand einer Laufzeitmessung für das Rahmen-Synchronisationswort des Zeitmultiplexrahmens bestimmt werden.

EP 0 186 229 A1

Philips Patentverwaltung GmbH       PHD 84 339 EP

N.V. Philips'Gloeilampenfabrieken       26.09.1985

Verfahren und Schaltungsanordnung zur Verkleinerung der Schutzzeiten zwischen Zeitkanälen eines digitalen Funk- übertragungssystems

Die Erfindung betrifft ein Verfahren zur Verkleinerung der Schutzzeiten zwischen Zeitkanälen eines digitalen Funkübertragungssystems gemäß dem Oberbegriff des Patentanspruchs 1.

Aus "Nachrichtentechnik Elektronik + Telematic 38 (1984), Heft 7, Seiten 264 bis 268" ist ein digitales Funkübertragungssystem bekannt, bei dem in den Zeitkanälen zur Sprach- und/oder Datenübertragung (Kommunikationskanal TCH) nacheinander eine Bit-Folge zur Ermittlung des Bit- Takts (Synchron), ein Rahmen-Synchronisationswort (Vorspann) und die Bit-Folge der Nachricht selbst übertragen werden. Die Zeitkanäle zur Nachrichtenübertragung (3 x 20 TCH) sind mit Organisationskanälen (3 CCH) zu einem Zeitmultiplexrahmen mit der Zeitdauer 31,5 Millisekunden angeordnet. Die beweglichen Funkstationen (Mobilgeräte) ordnen sich zur Nachrichtenübertragung einem der Zeitkanäle TCH zu, wobei der Verbindungsaufbau selbst über den Organisationskanal CCH durchgeführt wird. Die ortsfesten Funkstationen (Feststationen BS) sind im Zellularnetz so angeordnet, daß von einer ortsfesten Funkstation BS jeweils drei Zellen (Sektoren) der Funkverkehr durchgeführt wird.

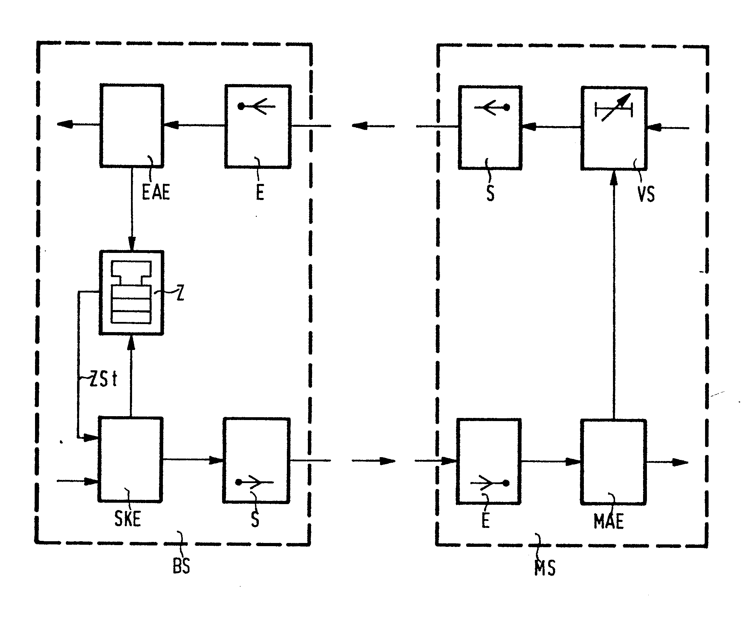

Wie dem Bild 4 auf Seite 266 der vorgenannten Literaturstelle zu entnehmen ist, ist in der aufeinanderfolge der Zeitkanäle zur Nachrichtenübertragung TCH jeweils zwischen diesen eine Schutzzeit von ungefähr 50 Microsekunden vorgesehen, um zu verhindern, daß die Zeitschlitze in Folge der Funklaufzeit sich überlappen. Diese Schutzzeit begrenzt den Funkversorgungsradius einer ortsfesten Funkstation BS auf ca. 8 km. Für größere Funkversorgungsradien ist demzufolge eine noch weit größere Schutzzeit erforderlich.

Der Erfindung liegt die Aufgabe zugrunde, für ein digitales Funkübertragungssystem der eingangs genannten Art ein Verfahren zur Verkleinerung der Schutzzeiten zwischen den Zeitkanälen des digitalen Funkübertragungssystems anzugeben.

Diese Aufgabe wird durch die im Patentanspruch 1 angegebenen Merkmale gelöst.

Das erfindungsgemäße Verfahren weist die Vorteile auf, daß nunmehr die Funkzellengröße unabhängig von den Schutzzeiten zwischen den Zeitkanälen des digitalen Funkübertragungssystems ist und daß über den Zeitmultiplexrahmen hinweggesehen eine größere Übertragungskapazität erreichbar ist.

Wird gemäß Patentanspruch 2 zur Bestimmung der Entfernung zwischen beweglicher Funkstation und ortsfester Funkstation eine Laufzeitmessung für das Rahmen-Synchronisationswort des Zeitmultiplexrahmens vorgenommen, so können bereits in der ortsfesten Funkstation und der beweglichen Funkstation vorhandene Einrichtungen mitverwendet werden. Die Laufzeitmessung selbst ist Bitgenau durchführbar und das in der ortsfesten Funkstation festgestellte Meßergebnis wird durch eine Funkmeldung der beweglichen Funkstation mitgeteilt.

Der Schaltungsaufwand für die Schaltungsanordnung gemäß Patentanspruch 3 ist gering, wobei in der ortsfesten Funkstation lediglich ein Zähler und in jeder beweglichen Funkstation lediglich ein einfach aufgebauter Verzögerungssatz zusätzlich erforderlich sind.

Die Erfindung wird im folgenden, anhand einer in der Zeichnung dargestellten Ausführungsform näher beschrieben und erläutert.

In Zeitmultiplex-Datenübertragungsanlagen ist bei der blockweisen Datenübertragung über drahtlose oder drahtgebundene Übertragungsstrecken dem Datenblock der Nachricht eine zweiteilige Impulsgruppe vorangestellt. Der erste Teil dieser Impulsgruppe ist die Bit-Folge zur Ermittlung des Bit-Takts und besteht meist aus einer Folge von z.B. 30 Bits, innerhalb der sich Bits des logischen Kennzustands Null mit Bits des logischen Kennzustands Eins abwechseln. Zur Ermittlung des Bit-Takts ist bei einem digitalen Funktübertragungssystem in der beweglichen Funkstation beispielsweise ein Bit-Taktgenerator vorgesehen, dessen Phasenlage mit der Phasenlage der Bit-Folge verglichen wird.

In Abhängigkeit vom Vergleichergebnis wird die Phasenlage des Bit-Taktgenerators so geregelt, daß in einer nachfolgenden Empfangs-Auswerte-Einheit die Abtastung der Bits des zweiten Teils der Impulsgruppe und der Bits der Nachricht jeweils in der Mitte des Bits erfolgt. Für den zweiten Teil der Impulsgruppe kann ein einheitliches Codeswort verwendet werden, welches die Bedeutung des Rahmen-Synchronisationsworts des Zeitmultiplexrahmens hat, d.h. dessen vollstände Erkennung bedeutet, daß nach den letzten Bits des Rahmen-Synchronisationsworts das erste Bit der eigentliche Nachricht folgt. Zur Erkennung des Rahmen-Synchronisationswortes kann beispielsweise ein digitales Filter (digitaler Korrelator) verwendet werden, welcher aus einem Schieberegister, bei dem die Null- bzw. Einsausgänge der einzelnen Stufen entsprechend dem zu erkennenden Codewort mit Widerständen beschaltet sind und einer Schwellwertschaltung besteht. Die anderen Enden der Widerstände sind zusammengeschaltet und bilden zusammen mit der Schwellwertschaltung eine UND-Schaltung. Eine solche Einrichtung ist z.B. aus IEEE-Transaktions, Band COM-16, 4. August 1968, Seite 597 bis 605 bekannt.

Von den vorgenannten Einrichtungen sind nur die beim erfindungsgemäßen Verfahren angewandten Einrichtungen in der Zeichnung dargestellt. Beispielsweise sind die in der ortsfesten Funkstation BS und den beweglichen Funkstationen MS angeordneten Nachrichten-/Datenquellen und -sinken nicht dargestellt (durch Pfeile bei SKE, MAE, VS und EAE angedeutet). Die Empfangs-Auswerte-Einheit EAE zur Erkennung des Rahmen-Synchronisationswortes, ist in der ortsfesten Funkstation BS angeordnet. In der ortsfesten Funkstation BS ist die Empfangs-Auswerte-Einheit EAE mit einem Empfänger E und einem Zähler Z verbunden. Die Meldungs-Auswerte-Einheit MAE ist in der beweglichen Funkstation MS mit einem dort angeordneten Empfänger E und einem Verzögerungssatz VS verbunden. Beim Verfahren gemäß der Erfindung wird in der beweglichen Funkstation MS ein von der Entfernung zwischen beweglicher Funkstation MS und ortsfester Funkstation BS abhängiger Vorhalt eingestellt. Für die in der Zeichnung dargestellten Ausführungsform wird in der ortsfesten Funkstation BS die Entfernung anhand einer Laufzeitmessung für das Rahmen-Synchronisationswort des Zeitmultiplexrahmens bestimmt und die gemessene Laufzeit durch eine Funkmeldung der beweglichen Funkstation MS mitgeteilt. Hierzu wird in der ortsfesten Funkstation BS beim erwarteten Zeitpunkt (Laufzeit gleich Null) des Rahmen-Synchronisationswortes der Zähler Z gestartet und beim Erkennen des Rahmen-Synchronisationswortes in der Empfangs-Auswerte-Einheit EAE der Zähler gestoppt. Die Sendekontrolleinrichtung SKE ist mit einem in der ortsfesten Funkstation BS angeordneten Sender S und mit dem Zähler Z verbunden. Der aktuelle Zählerstand ZSt des Zählers Z wird zu der beweglichen Funkstation MS im zugeordneten Zeitkanal übertragen. Mit dem oben genannten Verfahren kann die absolute Laufzeit (d.h. die bewegliche Funkstation MS führt keinen Laufzeitausgleich durch) gemessen werden.

Um die relative Laufzeit ·(auch negative Laufzeit möglich, da die bewegliche Funkstation MS einen Laufzeitausgleich vornimmt) messen zu können, muß der Zähler Z schon vor dem erwarteten Zeitpunkt gestartet werden, d.h. in der Regel 2 bit (doppelte Meßauflösung).

Der in einer Funkmeldung mitübertragene aktuelle Zählerstand wird vom Empfänger E der beweglichen Funkstation MS empfangen und der Meldungs-Auswerte-Einheit MAE zugeführt. Zur Einstellung des jeweiligen Vorhalts für den Zeitkanal wird in der Meldungs-Auswerte-Einheit MAE der Zählerstand ZSt ausgewertet und die Schutzzeit, d.h. der Zeitpunkt des Sendens des jeweiligen Zeitkanals, in Abhängigkeit von der gemessenen Laufzeit verändert. Dadurch kann die Schutzzeit bis auf die Sendertastzeit in den jeweiligen Zeitkanal verkleinert werden. Als Verzögerungssatz VS kann beispielsweise ein Schieberegister, welches mit dem Bit-Takt betrieben wird, verwendet werden.

Da Zugriffe auf den Organisationskanal CCH asynchron, d.h. ohne Laufzeitausgleich, erfolgen ist für Meldungen auf dem Organisationskanal CCH eine Schutzzeit vorzusehen. Dies bedeutet, daß die Übertragungskapazität eines Organisationskanals CCH geringer ist als die eines Zeitkanals TCH (zur Sprach- und/oder Datenübertragung). In der Regel ist die Übertragungskapazität des Organisationskanals CCH dennoch ausreichend, da die für die Sprachübertragung benötigte Datenmenge größer ist als die für die Steuerung des Verbindungsaufbaus benötigte Datenmenge.

Der vorangehend beschriebene Meßvorgang, welcher auch mit einer Meßauflösung kleiner ein bit vorgenommen werden kann, wird auch für Meldungen auf dem Organisationskanal CCH vorgenommen (d.h. absolute Laufzeitmessung). Die dabei gemessene Laufzeit (Zählerstand ZSt) wird der beweglichen Funkstation MS mitgeteilt, so daß ein Zugriff der beweglichen Funkstation MS auf den Zeitkanal TCH synchron erfolgen kann. Auf dem Zeitkanal TCH erfolgt dann eine relative Laufzeitmessung.

Patentansprüche

1. Verfahren zur Verkleinerung der Schutzzeiten zwischen Zeitkanälen eines digitalen Funkübertragungssystems mit im Zellularnetz angeordneten ortsfesten Funkstationen (BS) und mit beweglichen Funkstationen (MS) welche sich zur Nachrichtenübertragung einem Zeitkanal des Zeitmultiplexrahmens zuordnen, dadurch gekennzeichnet, daß in der beweglichen Funkstation (MS) ein von der Entfernung zwischen beweglicher Funkstation (MS) und ortsfester Funkstation (BS) abhängiger Vorhalt eingestellt wird.

2. Verfahren nach Anspruch 1, dadurch gekennzeichnet, daß in der ortsfesten Funkstation (BS) die Entfernung anhand einer Laufzeitmessung für das Rahmen-Synchronisationswort des Zeitmultiplexrahmens bestimmt wird und daß die gemessene Laufzeit durch eine Funkmeldung der jeweiligen beweglichen Funkstation (MS) mitgeteilt wird.

3. Schaltungsanordnung zur Durchführung des Verfahrens nach Anspruch 1 unter Verwendung einer an sich bekannten und in der ortsfesten Funkstation (BS) angeordneten Sendekontrolleinrichtung (SKE) zum Senden von Meldungen, einer an sich bekannten und in der ortsfesten Funkstation (BS) angeordneten Empfangs-Auswerte-Einheit (EAE) zur Erkennung von Rahmen-Synchronisationsworten des Zeitmultiplexrahmens und einer in jeder beweglichen Funkstation (MS) angeordneten Meldungs-

- 8 -

- 8 -

Auswerte-Einheit (MAE) zur Auswertung von Meldungen, <u>dadurch gekennzeichnet</u>, daß in der ortsfesten Funkstation (BS) ein Zähler (Z) angeordnet ist, welcher mit der Sendekontrolleinrichtung (SKE) und der Empfangs-Auswerte-Einheit (EAE) verbunden ist, welcher beim erwarteten Zeitpunkt des Rahmen-Synchronisationswortes oder kurz vorher (z.B. zwei bit) gestartet und beim Erkennen des Rahmen-Sychronisationswortes gestoppt wird, daß der aktuelle Zählerstand (ZSt) in dem der beweglichen Funkstation (MS) zugeordneten Zeitkanal übertragen wird und daß in der beweglichen Funkstation (MS) ein Verzögerungssatz (VS) angeordnet ist, welcher mit der Meldungs-Auswerte-Einheit (MAE), einer Nachrichtenquelle und einem Sender (S) verbunden ist und welcher anhand des durch die Meldungs-Auswerte-Einheit (MAE) ausgewerteten Zählerstandes den Vorhalt des jeweiligen Zeitkanals einstellt.

- 9 -

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| E | EP-A-0 171 525 (STANDARD ELEKTRIK LORENZ) * Insgesamt * | 1,2 | H 04 Q 7/04 H 04 B 7/26 |
| A | EP-A-0 121 410 (TOSHIBA) * Seite 1, Zeile 23 - Seite 2, Zeile 8; Seite 2, Zeile 25 - Seite 3, Zeile 12; Seite 5, Zeilen 13-17; Seite 7, Zeile 21 - Seite 8, Zeile 1; Seite 9, Zeile 12 - Seite 15, Zeile 11; Seite 17, Zeilen 17-25; Seite 20, Zeile 20 - Seite 31, Zeile 14 * | 1-3 | |
| A | EP-A-0 110 392 (INT. STANDARD ELECTRIC CORP.) * Seite 7, Zeile 22 - Seite 8, Zeile 24; Anspruch * | 1,2 | |
| A | DE-A-2 659 635 (SIEMENS) | | |

RECHERCHIERTE SACHGEBIETE (Int. Cl 4)

H 04 Q
H 04 B

Der vorliegende Recherchenbericht wurde für alle Patentansprüche erstellt

| Recherchenort | Abschlußdatum der Recherche | Prüfer |
|---|---|---|
| DEN HAAG | 20-03-1986 | GERLING J.C.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument